# DEMANDE DE BREVET EUROPEEN

(11) **EP 1 039 608 A1**
(43) Date de publication de la demande: **27.09.2000**
(21) Numéro de dépôt: 99500048.6
(22) Date de dépôt: 26.03.1999
(51) Int. Cl.: H02G 3/14, H02G 3/08

(54) **Ensemble modulaire pour mécanismes électriques de surface et/ou à encastrer**

(71) Demandeur: Interlander Patermann, S.L., 08029 Barcelona (ES)
(72) Inventeur: Guitart Camps, Francisco D., 08029 Barcelona (ES)
(74) Mandataire: Manzano Cantos, Gregorio

(57) **Abrégé**

ENSEMBLE MODULAIRE POUR MÉCANISMES ÉLECTRIQUES DE SURFACE ET/OU À ENCASTRER comprenant un jeu de plaques modulaires à profil arc-sphérique ayant des moyens pour se fixer sur des bâtis-supports respectifs qui se relient linéairement pour former des batteries contiguës de divers mécanismes électriques, avec un développement et un volume prévu pour loger des mécanismes électriques de surface ou alternativement encastrables, qui sont intérieurement interconnectables, qui ont des accès pour le branchement extérieur et des flancs enjoliveurs indépendants qui ferment, à leurs extrémités, les unités ou les batteries combinées de plaques et qui sont susceptibles d'être montées sur les propres plaques ou sur les bâtis, en formant des ensembles uniformes de développement arc-sphérique de la propre plaque avec les touches et/ou les bases desdits mécanismes électriques.

## Description

L'invention concerne, selon l'énoncé, un ensemble d'éléments modulaires, concrètement la plaque, les côtés enjoliveurs et le bâti-support pour des mécanismes électriques de surface ou à encastrer, indistinctement, bien que le critère essentiel de cet ensemble est d'apporter une gamme complète de plaques -cadre-enjoliveur de surface combinable linéaire et successivement selon le propre alignement des bâtis.

Selon ce premier exposé l'invention concerne un ensemble pour des mécanismes électriques de surface qui sert, néanmoins, aussi pour des mécanismes à encastrer. Cela implique qu'il existe un autre développement original des mécanismes électriques spécifiques pour cette gamme de surface (objet d'une autre ou d'autres brevet(s)) et qui disposent des moyens ou structures calculés pour se loger dans le bâti-support et les deux dans l'espace défini par la plaque.

L'ensemble modulaire, selon l'invention, est formé par la plaque et les deux enjoliveurs latéraux indépendamment. Les enjoliveurs forment les côtés de l'ensemble et ils peuvent aussi bien être assemblés avec la plaque qu'avec le bâti-support. Si le mécanisme contenait une, deux, trois versions ou plus, les enjoliveurs latéraux, il ne serait nécessaire que d'en employer deux, une à chaque extrémité, puisque l'espace pour monter les mécanismes aussi bien dans le bâti que dans la plaque garde les mesures normalisées selon la série de combinaisons pourvues de: 71 m/m entres des centres ou des sous-divisions à 35,5 m/m et des boites de 60 m/m de diamètre ou de diamètre quadrangulaire de 60 m/m.

L'objet principal de l'invention apporte un ensemble de bâti-plaque.enjoliveur combinables qui tout en étant de surface ont un dessin structural pour loger des mécanismes électriques avec les mêmes particularités techniques des mécanismes à encastrer et dans toute la gamme des mécanismes électriques (non industriels), aussi bien dans la ligne des interrupteurs que des fiches.

### ETAT DE LA TECHNIQUE

Une fois réalisé l'exposé basique de la prétention de l'invention, objet de ce brevet, dans les antécédants de l'Etat de la Technique, il existe le U 9701352/8 de QUINTELA S.A. concernant un ensemble de support-plaque-enjoliveur où le premier est spécialement structuré pour s'adosser latéralement et s'unir au moyen de l'enjoliveur, à cet effet, on prévoit des platines (selon la description) desquelles une extrémité, a des affaiblissements ou des pré-coupes pour déchiqueter ou dégager les telles "platines" lorsque l'on essaie d'aligner successsivement deux, trois modules ou plus.

A cet effet les bâtis-suuports sont spécifiques et avec des caractéristiques spéciales pour pouvoir permettre aux enjoliveurs, qui sont des pièces à la manière de goulotte de section en "U" renversé et avec la même étendue et profil que les "platines" internes (on suppose qu'elles sont rigides), de s'ajuster entre deux parois contiguës du support.

La plaque est montée et assujétie au support au moyen de petites entailles prévues aux extrémités respectives d'une pièce et de l'autre.

### ACTIVITÉ INVENTIVE

L'idée principale de l'invention est le développement d'une plaque dont le dessin et le volume permet d'intégrer un bâti-support traditionnel ayant des mécanismes électriques de surface, spécialement dessinés pour cette application, bien qu'indistinctement, on peut monter des mécanismes à encastrer.

Une autre idée de l'invention est que ladite plaque est dessinée pour être ancrée sur le bâti sur les parties mortes de l'encadrement intérieur de celui-ci et de la fenêtre porte-mécanismes.

Une autre idée de l'invention est que ladite plaque incorpore des moyens pour recevoir et assujétir les pièces latérales (côtés ou enjoliveurs).

Une autre idée de l'invention est l'incorporation de pièces latérales ou d'enjoliveurs qui ont des moyens d'assemblage ausi bien pour se fixer sur la plaque que sur le bâti-support, sur les propres moyens de liaison comportant lesdits bâtis.

Dans cette même idée les bâtis traditionnels ayant des moyens latéraux de liaison par bouvetage en queue d'aronde pour l'union entre eux avec d'autres bâtis, n'ont pas de modifications fondamentales.

Une autre idée de l'invention est que lesdits bâtis ont des accès latéraux intercommunicables pour l'installation des connecteurs d'alimentation des mécanismes électriques, évidemment, de façon masquée et, d'autes accès praticables (pour casser), pour le passage des fils conducteurs en disposition verticale.

Une autre idée est le fait de prévoir des moyens sur lesdits bâtis pour incorporer une pièce supplémentaire avec des griffes pour le serrage du bâti dans la boite encastrée de connexion.

Dans cette idée on contemple aussi le fait que le capot ait aussi des accès praticables pour l'entrée des fils conducteurs verticaux extérieurs.

### DESCRIPTION DE L'INVENTION

Selon l'invention, la plaque proposée est une pièce (évidemment moulée en plastique), avec un profil longitudinal sphérique avec ses chants transversaux et longitudinaux biseautés, fermée par les côtés et ouverte en plan par une fenêtre légèrement rectangulaire flanquée par des bordures situées par dessous le plan superficiel, dans une portion suffisante pour localiser les capots des mécanismes électriques au ras de la surface de la plaque.

Un autre détail est que lesdites bordures ont une jupe intérieure et des pattes avec des onglets pour leur ancrage sur des rainures respectives prévues aux extrémités du socle intérieur des flancs du bâti-support, tandis que, les côtés de la plaque ont des membres femelles à la manière d'ouvertures prévues dans le chant inférieur, à chaque extremité, avec une coupe échelonnée pour permettre le montage des flancs-enjoliveurs préalablement à leur incorporation au batî.

Dans un autre détail de l'nvention, les flancs enjoliveurs sont intégrés par les pièces respectives (en plastique moulé) creuses, de faible épaisseur, avec un profil sphérique identique à la plaque, avec une face intérieur plate et une autre extérieure convexe, tandis que la dite face plate, comporte des membres mâles qui sont des saillies en queue d'aronde pour s'encastrer dans les ouvertures de la plaque, prévues à cet effet pour ces côtés.

Dans une autre réalisation aditionnelle lesdits membres mâles d'assemblage sont combinés avec des évidements rectangulaires intercalés entre l'un ou l'autre pour adapter ou assembler lesdits côtés enjoliveurs directement sur les moyens rainés et languettés de liaison des bâtis support.

La localisation des côtés enjoliveurs, dans les deux options, est possible grâce au fait que la jupe intérieure des plaques contenues entre les griffes d'ancrage, ont une hauteur plus petite que celles-ci et les flancs aussi. Les onglets entrent dans les rainures du socle intérieur du bâti en s'ancrant contre un épaulement à arêtes. La jupe prend appui sur le socle et le flanc de la plaque sur les dents de liaison du bâti. La plaque et ses côtés restent ainsi placés contre les moyens rainés et languettés de liaison du bâti et ainsi les dents du bâti sont aussi libres pour recevoir lesdits côtés lorsque l'on choisit la seconde réalisation.

Pour cette raison les dents de liaison des bâtis pour s'unir les unes aux autres, et qui ont une forme en queue d'aronde et qui à leur tour, entre celles-ci, forment des entailles en queue d'aronde, permettent que lesdits côtés s'assemblent avec celles-lá par accouplement rainé et languetté.

A cause de la raison antérieure, les dents de liaison sont déplacées au ras de la base du bâti.

Un autre détail de l'invention est que les rainures d'accès, prévues dans les flancs du bâti pour les fils conducteurs d'interconnexion linéaire des mécanismes électriques montés, logiquement sur les bâtis adossés contigus, sont communiqués avec des sorties prévues sur les coins de la base du bâti. Ce sont des sorties oblongues situées en position oblique pour faciliter l'orientation des fils.

Une autre particularité desdits bâtis est que les extrémités (ou côtés opposés) ont des zones praticables ou des fenêtres pour embranchement des fils conducteurs externes. Ceux-ci sont directement en regard de zones aussi praticables (pour casser) prévues aux extrémités des plaques ou capots.

Â ces effets ledit bâti, objet de l'invention, est un encadrement rectangulaire à double paroi et à section en U" où, la partie fermée de celle-ci est la base de l'encadrement et la partie ouverte est le lieu d'accouplement de la plaque.

Ledit bâti dans les flancs internes a au centre des défoncements pourvus d'un téton disposé pour recevoir une ferrure comportant les griffes d'enclenchement qui servent à l'assujétir aux boites encastrées de connexion.

Cette ferrure est composée d'un pont dont les pattes présentent des trous qui s'encastrent dans lesdits tétons en se fixant par simple pression des pattes tandis que sur la traverse on dispose des jeux respectifs de vis et d'écrous qui régulent la tension des griffes d'enclenchement. Des vis qui, sont logiquement orientées vers la base du bâti pour l'accès de l'outil.

La philosophie de l'invention est d'apporter une plaque avec ses flancs enjoliveurs, pour des mécanismes de surface qui peut être utilisée indistinctement avec des mécanismes encastrés.

Cette versatilité permet même de combiner les uns les autres. On peut ainsi partir d'une boite de connexion encastrée, avec un mécanisme de surface ou encastrable et même sans mécanisme et monter une série de mécanismes de surfaces connectés à travers les bâtis.

On peut également partir d'un branchement externe et, l'on peut aussi monter une série de mécanismes de surface; ou alternativement de mécanismes de surface ou encastrés ou de mécanismes encastrés toujours interconnectés à travers les bâtis.

Les mécanismes de surface ayant en tant que support un bâti comme celui décrit, recquiert un développement spécifique pour ce type de montures où les hauteurs des organes et leurs projections, doivent être calculées en fonction de celle-ci, ainsi que le dessin des différents et multiples composants.

Une idée plus large des caractéristiques essentielles de l'ìnvention será réalisée à la suite en faisant référence aux feuilles de dessins ci-jointes, où l'on présente schématiquement et uniquement à la manière d'exemple, les détails préférés de l'invention.

Les figures 1, 1A, 1B et 1C sont des vues en élévation frontale, en plan, en élévation latérale et en perspective inférieure de la plaque avec ses flancs enjoliveurs.

Les figures 2, 2A et 2B sont des vues en plan et en perspectives vues de dessus et de dessous d'une association de trois modules.

Les figures 3 et 3A, sont des vues en perspective de dessus et de sessous de la plaque.

Les figures 4, 4A, 4B, 4C et 4D sont des vues en élévation frontale, latérale et en plan; en perspective de dessus et de dessous des flancs de la plaque.

Les figures 5, 5A, 5B, 5C, 5D, 5E et 5F sont des vues en perspective exterérieure, intérieure et inférieure; en plan, élévation latérale externe, frontale et latérale interne des côtés de la plaque dans une autre réalisation.

Les figures 6, 6A, 6B sont des vues en perspective de dessus, de dessous et en plan supérieur du bâti - support.

Les figures 7 et 7A sont des vues en plan supérieur et perspective de dessus de l'union de divers bâtis.

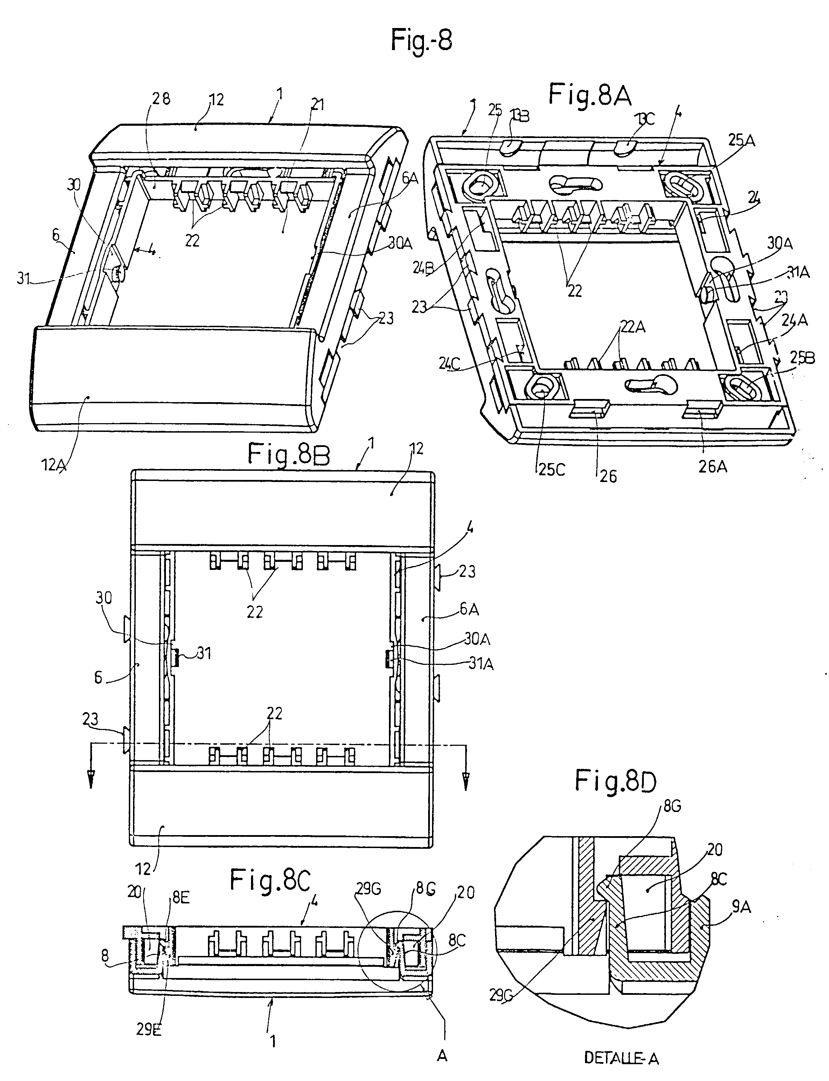

Les figures 8, 8A, 8B, 8C et 8D sont des vues en perspective de dessus et de dessous; en plan supérieur; en section par la ligne A-A de la figure 8B et détail A de la figure 8C de la plaque montée sur le bâti.

Les figures 9, 9A, et 9B sont des vues en perspective supérieures, inférieure et détail de la figure 9A du montage des flancs de la plaque sur le batî.

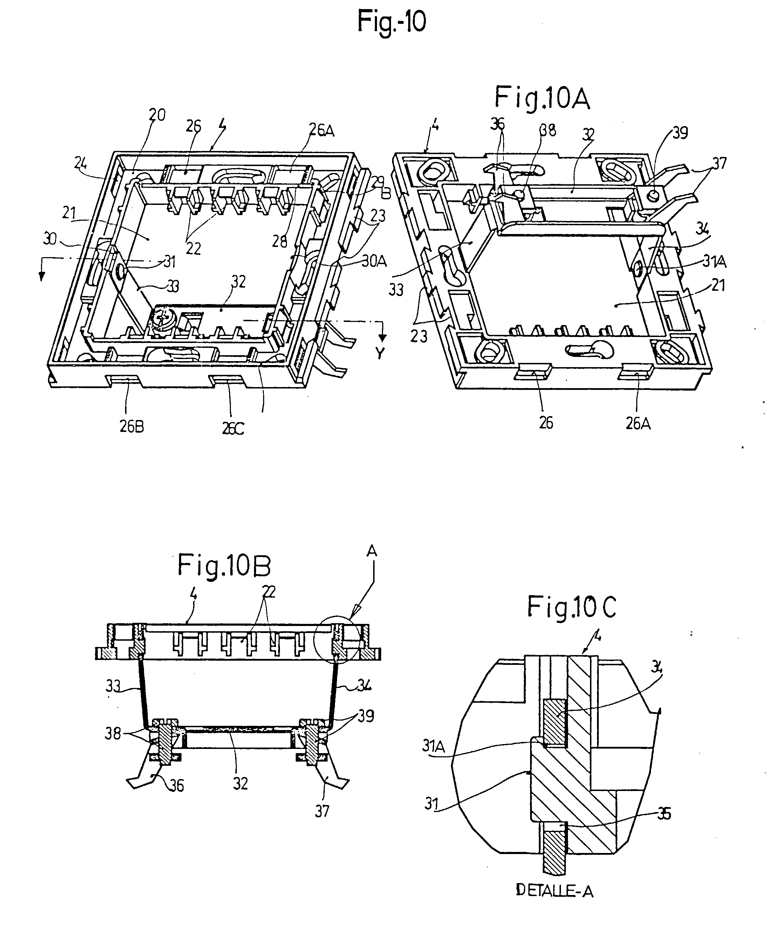

Les figures 10, 10A, 10B et 10C sont de vues en perspective de dessus et de desssous; section par la ligne Y-Y de la figure 10 y détail A de la figure 10B du pont d'enclenchement du bâti sur la boite encastrée.

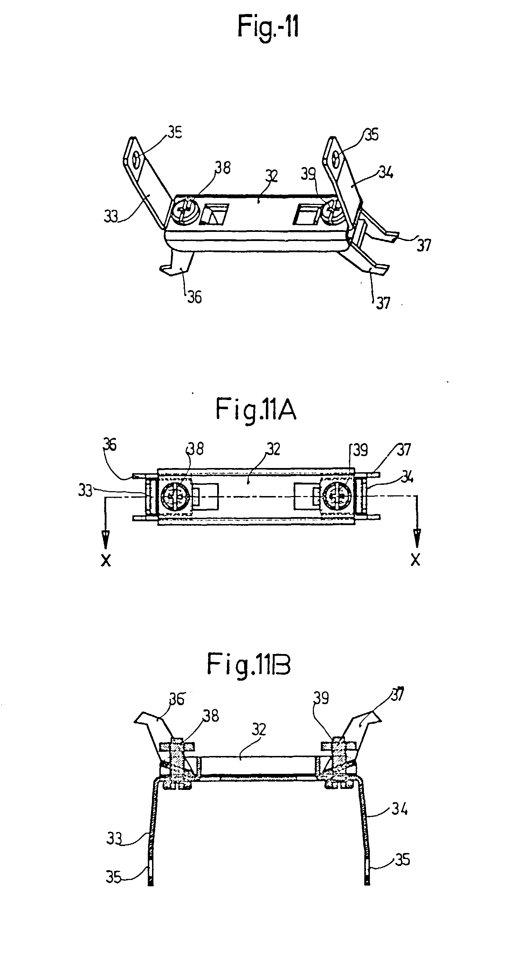

Les figures 11, 11A et 11B sont des vues en perspective, en plan supérieur et section par la ligne X-X de la figure 11A de la ferrure pour le serrage du bâti à la boite encastrée.

Les figures 12, 12A et 12B sont une vue en perspective, en élevation latérale et en plan supérieur d'un module avec l'échantillon d'une touche et espace vide pour une autre.

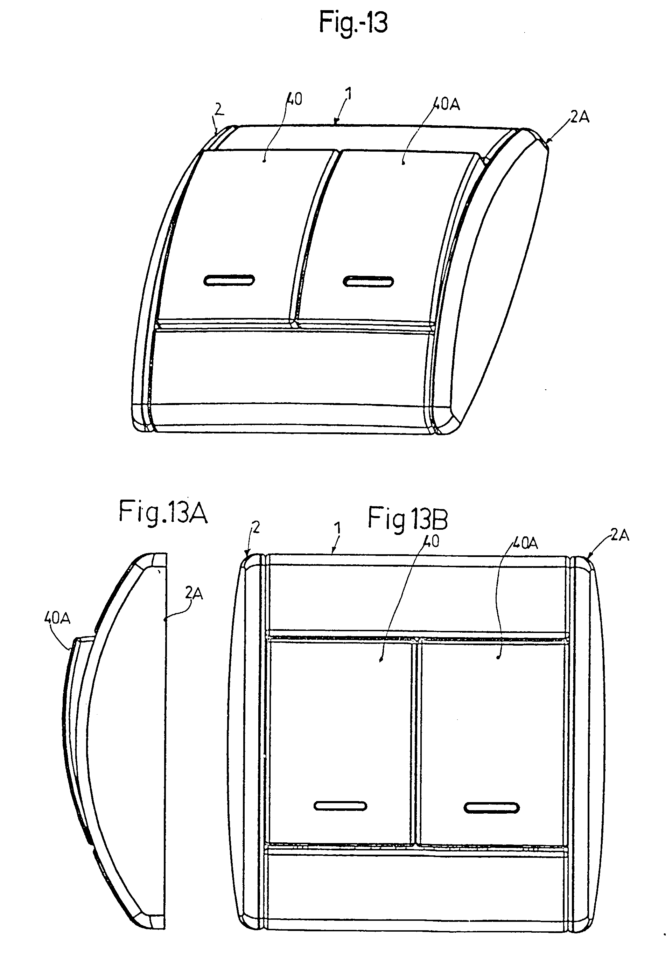

Les figures 13, 13A et 13B sont des vues analogues aux antérieures du même module avec deux touches.

Les figures 14, 14A et 14B sont des vues analogues aux antérieures du mêmes module avec une únique double touche.

Les figures 15 et 15A sont des vues en perspectives de dessus et de dessous d'un module de fiche extérieure avec prise de terre.

Les figures 16 et 16A sont des vues identiques aux antérieures d'un module de fiche simple.

Les figures 17 et 17A sont des vues identiques aux antérieures d'un modules de fiche encastrée avec prise de terre.

Les figures 18 et 18A sont des vues identiques aux antérieures d'un module de fiche tripolaires simples de module partagé.

Les figures 19 et 19A sont des vues identiques aux antérieures d'une fiche bipolaire.

### DESCRIPTION DES DESSINS

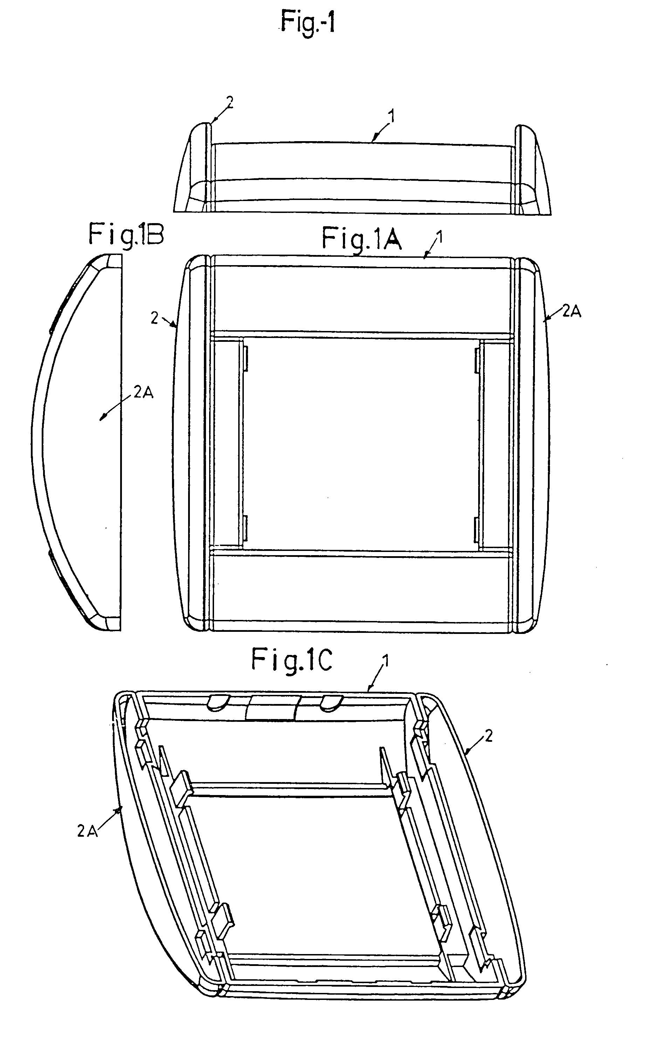

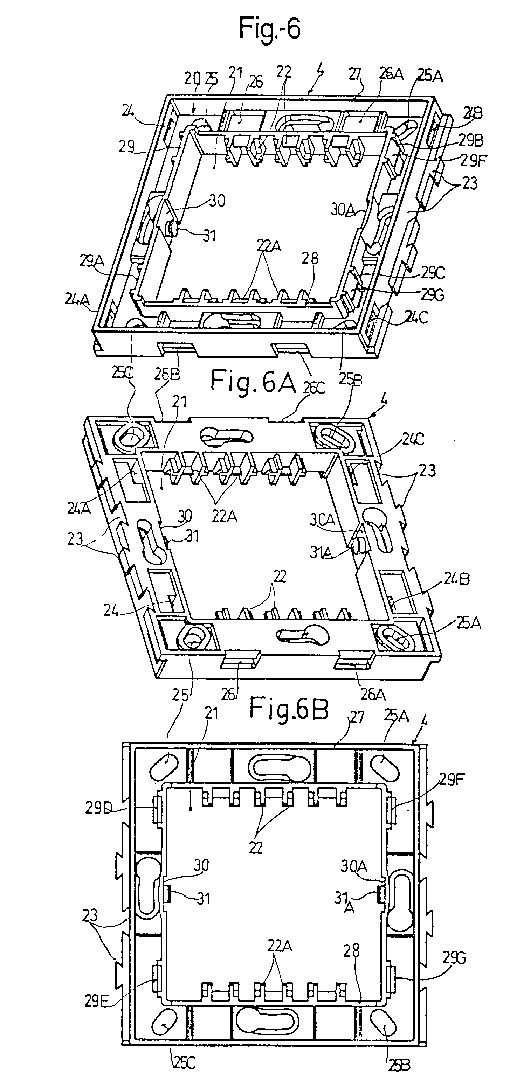

Selon lesdits dessins, les figures 1 à 6B, les pièces de l'ensembles modulaires sont la plaque (1); les flancs enjoliveurs (2), une autre réalisation (3) et le bâti-support (4).

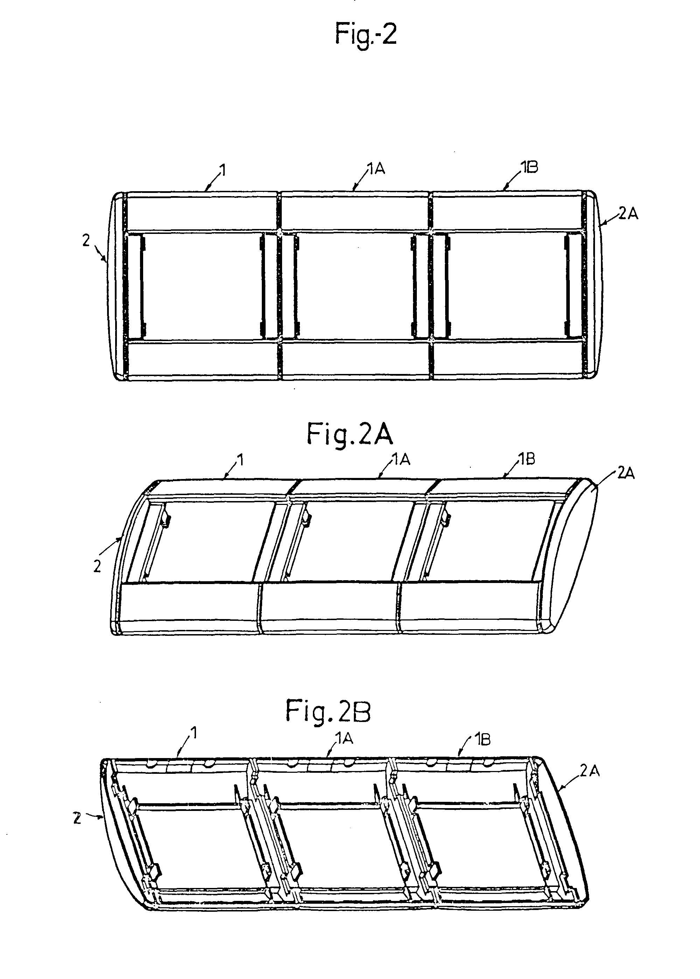

Les figures 1 à 1C montrent un ensemble monomodulaire, tandis que les figures 2, 2A et 2B montrent un ensemble modulaire triple intégré par l'alignement linéaire, adossé des plaques (1, 1A et 1B) avec des flancs enjoliveurs (2 et 2A),

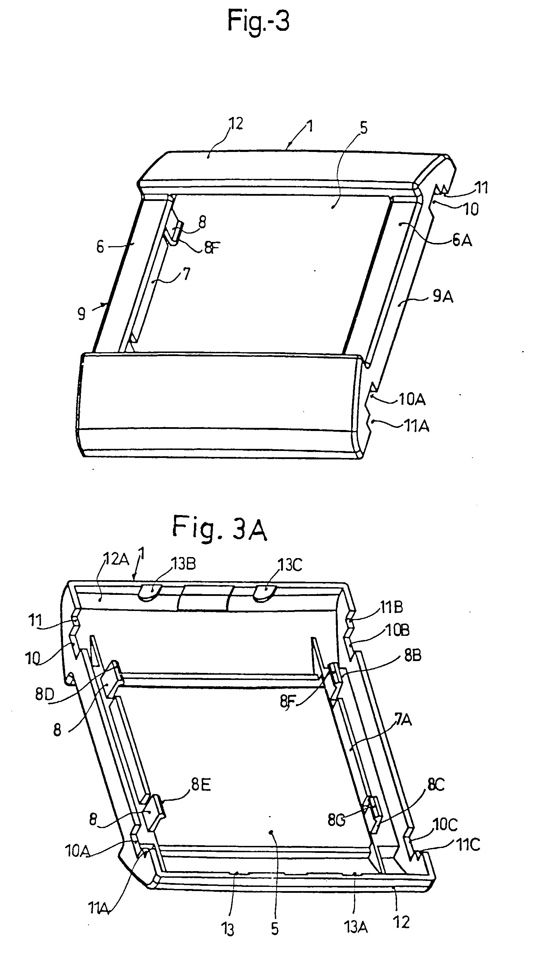

La plaque (1) (Figs 3-3A) a un profil sphérique en sens longitudinal recueilli spécialement aux extrémités (12-12A), coupée centralement para la fenêtre rectangulaire (5) flanquée par les bordures (6-6A) en différence de niveau par rapport à la base de sa plaque (1), en étant pourvue intérieurement de pans (7-7A) de moindre hauteur que les côtés (9-9A) de la plaque (1) qui, à ses extrémités, ont des pattes respectives (8-8A-8B-8C) avec des griffes d'ancrage (8D-8E-8F-8G) pour s'enfiler dans des moyens respectifs du bâti-support (4).

Les flancs (9-9A) ont des ouvertures rectangulaires (10-10A-10B et 10C) avec des petites étendues échelonnées attenantes (11-11A-1B-11C), pour permettre l'ancrage latérale des flancs enjoliveurs (2-3), de telle manière qu'incorporée péalablement à la plaque (1) lorsque celle-ci est emboîtée dans le bâti (4) les côtés (2-3) ne peuvent pas être démontés avant de lever la plaque (1).

Les extrémités (12-12A) des plaques (1) ont des secteurs praticables (13-13A-13B-13C) (pour casser), pour un branchemenet extérieur des fils d'alimentation.

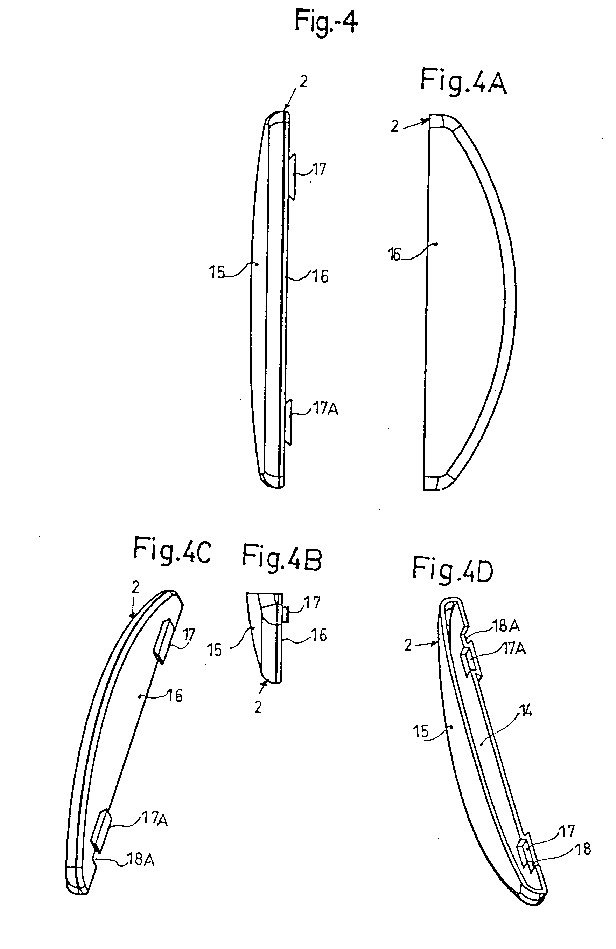

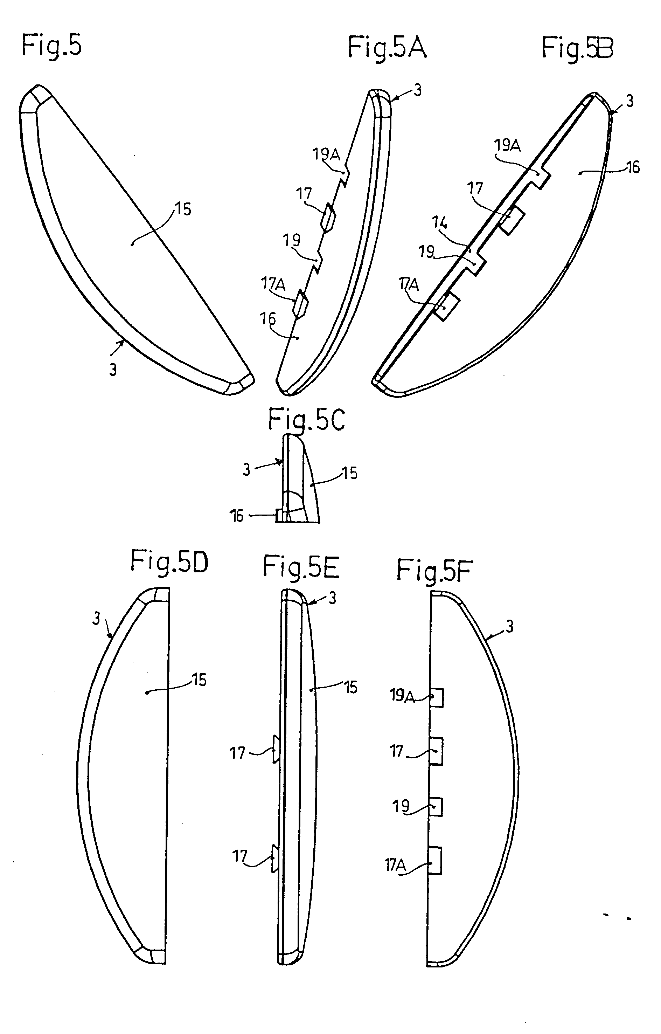

Les pièces latérales (2 et 3) ( (Figs 4 à 4D et 5 à 5F), sont des pièces creuses (14) avec le même profil sphérique que la plaque (1), définies par une face extérieure en arc convexe (15) et une autre intérieure plate (16) ou, près du bord inférieur et à chaque extrémité, elles présentent des saillies ou épaulements (17-17A) creux en queue d'aronde, associés avec des petits crans attenants (18-18A) dont la combinaison permet d'emboîter ledit épaulement dans les ouvertures (10-10A-10B-10C) des plaques (1), bien qu'elles soient montées sur les bâtis (4).

Dans le flanc enjoliveur (3), intercalés avec les épaulements (17-17A) en queue d'aronde se trouvent des ouvertures rectangulaires (19-19A) qui servent à être montées sur les moyens mâles de bouvetage des bâtis (4).

Le bâti-support (4) de format classique carré est une pièce définie para un encadrement creux (20) de section en "U" avec tous ses plans droits; délimités par le socle extérieur (27) et l'intérieur (28), le vide (21) et les moyens d'ancrage (22-22A) pour les mécanismes électriques; et des moyens rainés et languettés (23) de liaison entre bâti situés au ras de la base du bâti (4) sur ses flancs respectifs.

Dans les coins desdits flancs se trouvent les rainures (24-24A-24B-24C) pour l'interconnexion entre les bâtis (4), qui sont associés avec des trous oblongues et obliques (25-25A-25B-25C), qui permettent l'accès des conducteurs par dessous le vide (21) pour réaliser d'une façon aisée et efficace le branchement sur les mécanismes.

Aux extrémités du bâti (4), dans le socle extérieur (27) on prévoit aussi des accès (26, 26A, 26B, 26C), en rapport avec les secteurs (13, 13A, 13B, 13C) praticables pour le branchement extérieur des fils d'alimentation et associés aussi auxdits trous de passage (25, 25A, 25B, 25C), pour les connexions intérieures.

Dans le socle intérieur (28) on dispose les rainures de sertissage (29, 29a, 29B, 29C) pour les pattes et les griffes de sertissage (8, 8A, 8B, 8C, 8D, 8E, 8F, 8G) des plaques (1) et, á l'intérieur de ce socle, aparraissent centralement les défoncements (30, 30A) avec un appendice ou téton (31-31A) pour le montage de la ferrure d'enclenchement du bâti (4) sur la boite encastrée.

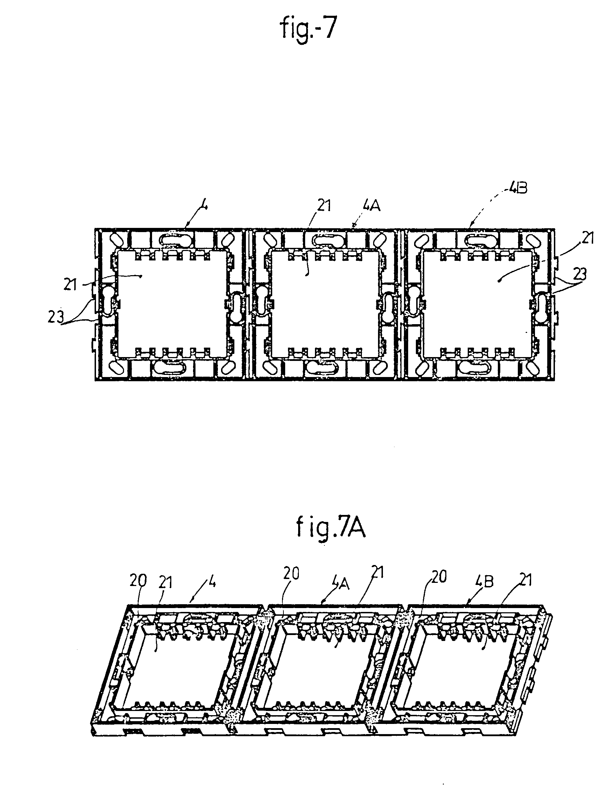

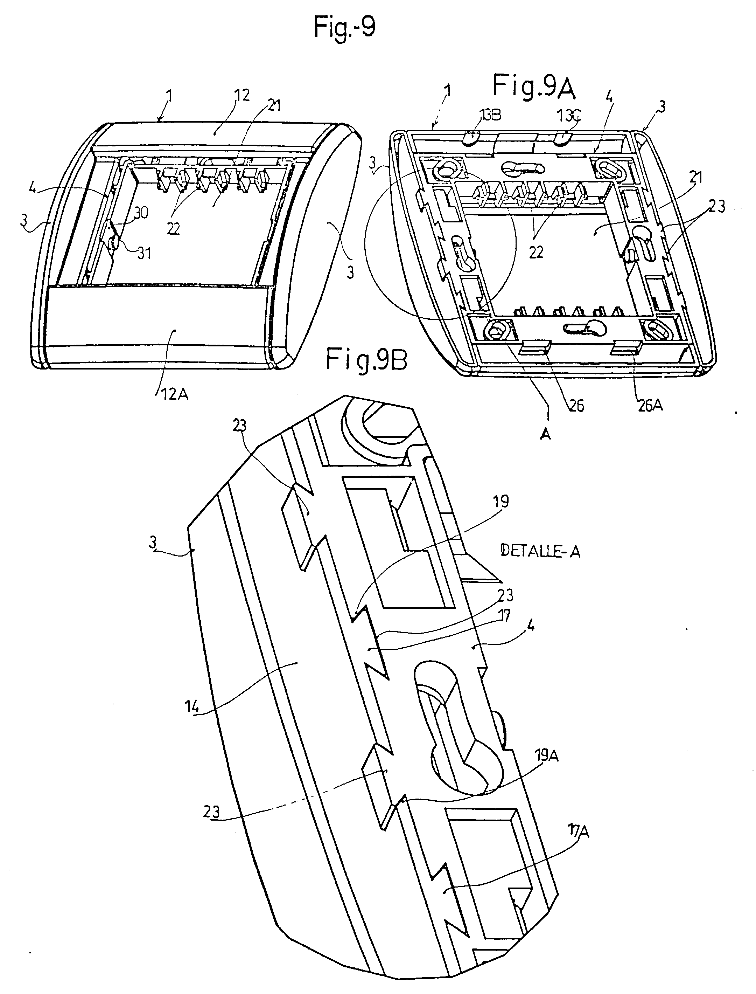

Les figures 7 et 7A montrent une batterie alignée de bâtis (4, 4A, 4B) et les Figures 9, 9A, 9B le montage des flancs enjoliveurs (3) au moyen des épaulements (17 - 17A) et des échancrures (19, 19A) sur les moyens de bouvetage (23) des bâtis (4), lorsque le flanc est monté sur ceux-ci et non pas sur la plaque (1).

La ferrure d'enclenchement (32) est un pont en forme de fourche oú , ses pattes (33, 34), ont des trous (35) près des extrémités pour s'encastrer dans les épaulements ou tétons (31) du bâti (4) qui, à cet effet, a une oreille périphérique (31A) pour éviter le délogmeent des pattes (33, 34). Sur le tronçon commun de la fourche (32), à chaque extrémité, se trouvent des jeux avec des onglets d'enclenchement respectifs (36,37) et des moyens tenseurs (38, 39).

Cette ferrure (32) est facultativement incorporable quand il est nécessairte de fixer l'ensemble des mécanismes dans lesdites boites encastrées de connexion.

Dans les représentations suivantes il y a une série d'exemples des ensembles simples de surface, selon l'invention, en combinant avec une plaque et des flancs enjoliveurs respectifs avec des différentes versions de mécanismes.

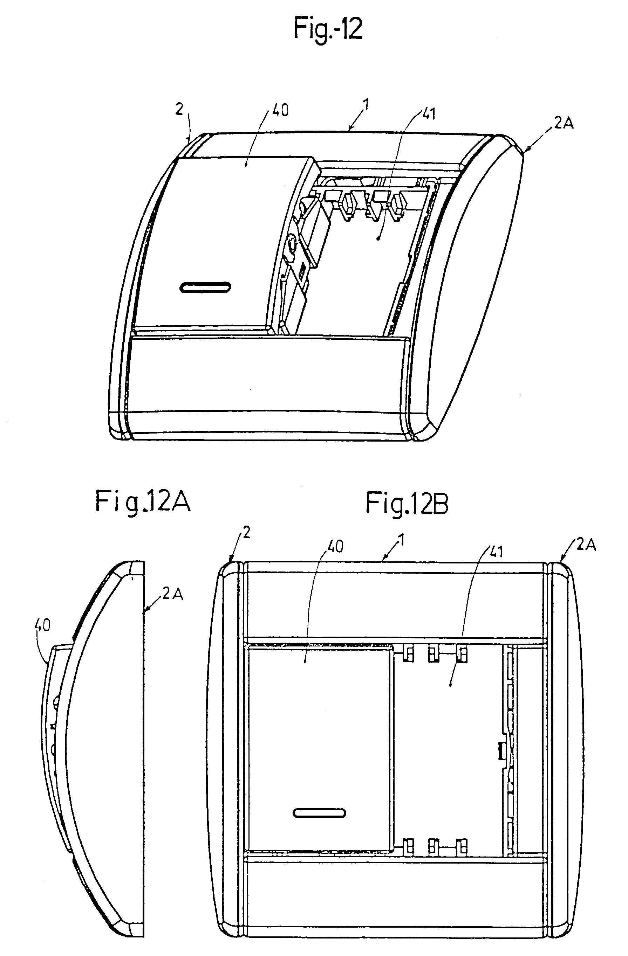

Dans les figures 12 à 12 B l'incorporation d'un interrupteur simple avec une touche (40) dont le profil est le complément de la section sphérique de la plaque (1), et un espace (41) pour un autre mécanisme.

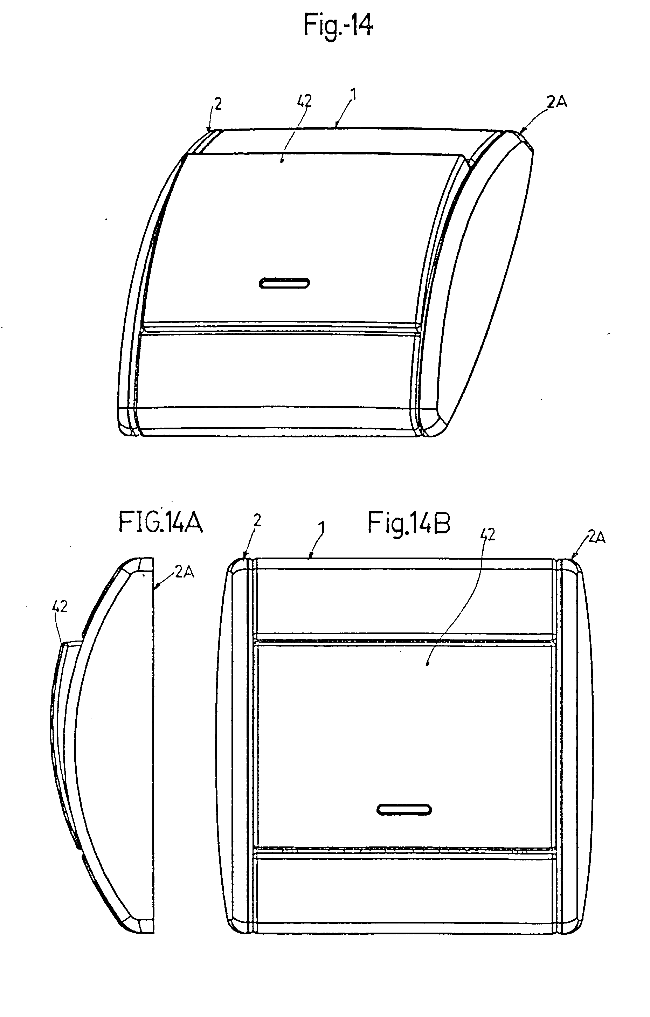

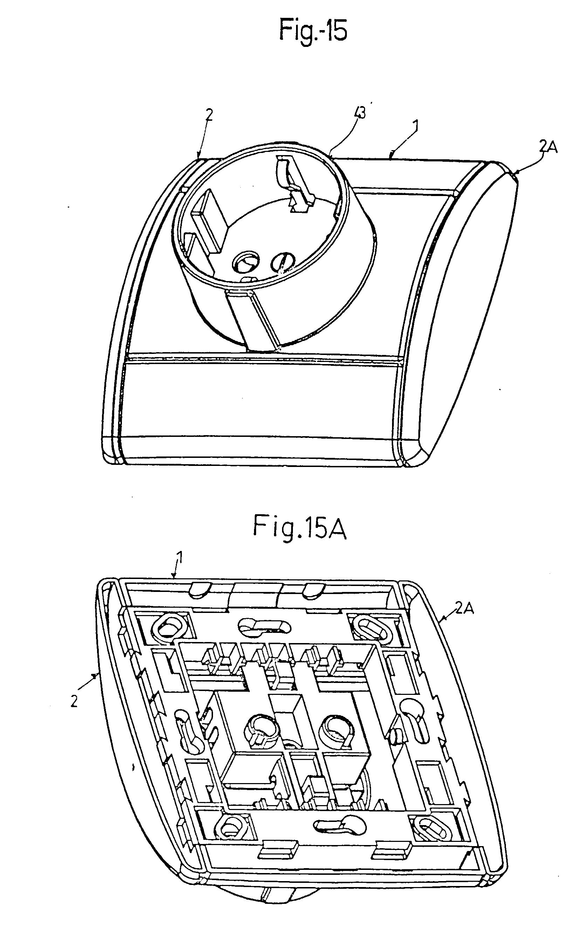

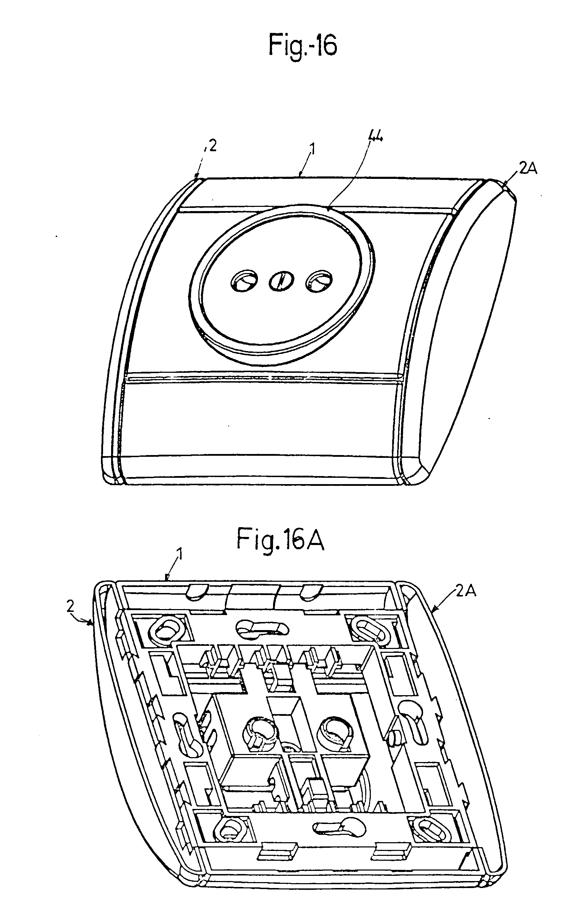

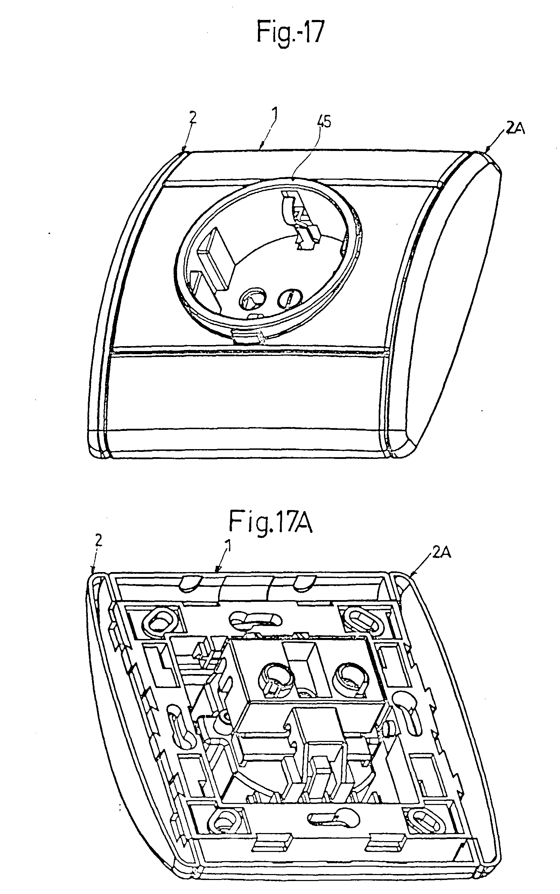

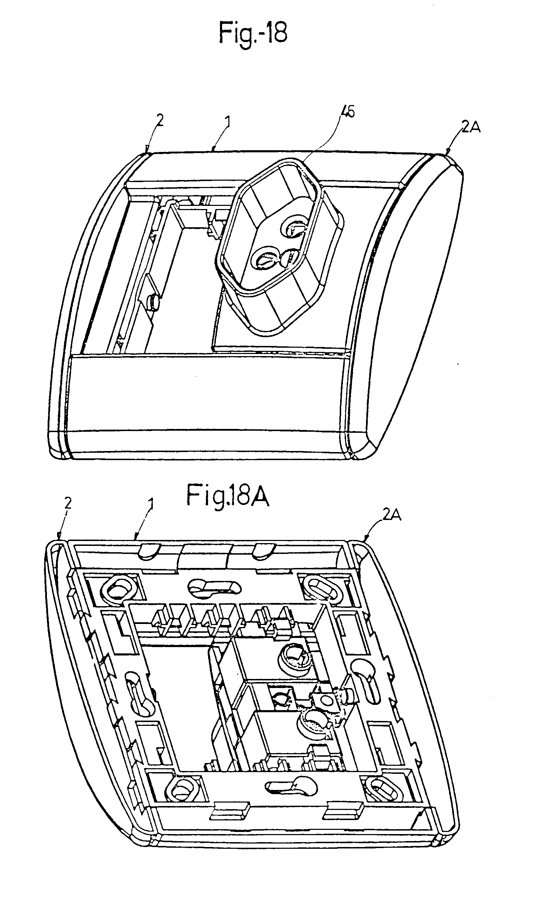

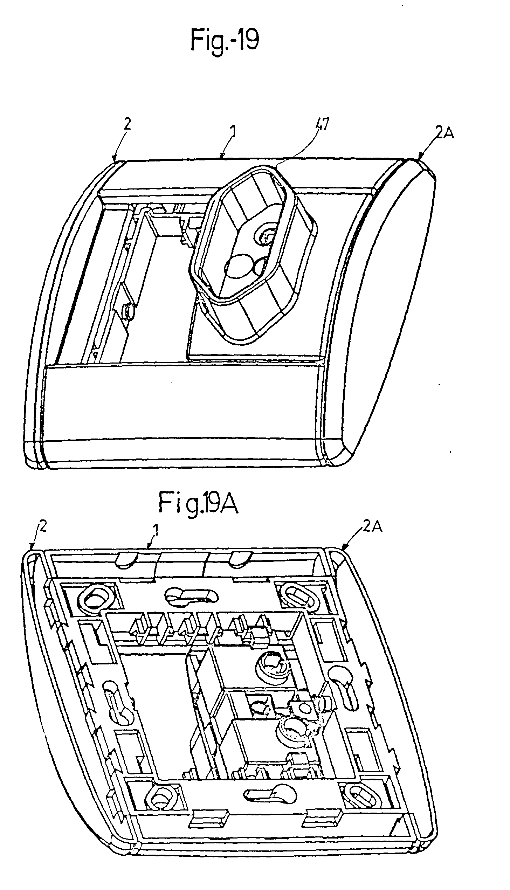

Un ensemble avec deux touches (40-40A) dans les figures (13-13A); avec une seule double touble (42) (Figures 14 à 14B); avec une fiche de prise de terre de surface (43) (Figure 15-15A); avec une fiche simple (44) (Figures 16-16A) ;; avec prise de terre encastrable (45) (Figures 17, 17A); avec fiche simple tripolaire (46) partagée (Figures 18, 18A) ; avec une fiche simple partagée sans prise de terre (47) (Figs. 19-19A).

Tous les mécanismes sont intégrés par des équipements supplémentaires dont le développement de profil est complémentaire du propre profil sphérique de la plaque-capot (1), les bordures latérales (6-6A) de ladite plaque, les appuis de ces équipements ou des touches (40-40A-42) dans les mécanismes interrupteurs.

Une fois décrite convenablement la nature de l'invention, on constate aux effets opportuns, que celle-ci ne se limite pas aux détails exacts de cet exposé, mais bien au contraire, on y introduit les modifications considérées opportunes, toutefois sans modifier les caractéristiques essentielles de celle-ci, qui sont revendiquées à la suite.

## Revendications

1. ENSEMBLE MODULAIRE POUR MÉCANISMES ÉLECTRIQUES DE SURFACE ET/OU À ENCASTRER, constitué par une plaque-capot (1) modulaire, alignables successivement, fermées par des flancs enjoliveurs (2) incorporables, aussi bien l'une que l'autre version, à ladite plaque (1) sur le bâti-support (4), oú est montée toute la gamme de mécanismes électriques d'interruption et de fiche uniques ou conbinés de surface ou encastrables, se caractérisant en ce que la plaque-capot (1) est une pièce à développement rectangulaire et à profil longitudinal arc-sphérique, fermée par des côtés (9, 9A), avec des moyens femelles à encastrer sur les pièces latérales enjoliveuses et/ou avec des moyens pour se fixer indistinctement au bâti-support (4); des flancs enjoliveurs (2) constitués par une pièce creuse avec un profil sphérique identique à celui de la plaque (1) pourvues de moyens mâles d'assemblage pour être montés sur les plaques (1) et/ou des moyens mixtes (4) pour être montés sur le bâti-support (4); un bâti (4) au format traditionnel et au profil creux en "U" et des plans droits (20), avec des moyens de sertissage pour les plaques (1); des moyens pour l'interconnexion intérieur des fils conducteurs, aussi bien pour le branchement linéaire interne que pour le branchemewnt externe, ainsi que des moyens de liaison rainés et languettés (23) entre le propres bâtis., situés latéralement au ras de la base pour permettre l'accouplmenet des plaques (1), et le cas échéant, celui des flancs enjoliveurs (2), (3).

2. ENSEMBLE MODULAIRE POUR MÉCANISMES ÉLECTRIQUES DE SURFACE ET/OU À ENCASTRER, selon la revendication 1, une plaque de type modulaire (1) à développement rectangulaire et à profil longitudinal arc-sphérique qui comprend une fenêtre (5) pour l'accès des mécanismes électriques et qui est caractérisé en ce que celle-ci est délimitée latéralement par des bordures plates (6-6A) en différence de niveau avec le profil cambré de la plaque (1); à angle droit avec lés côtés (9-9A) de celle-ci et avec des jupes internes (7-7A) de moindre hauteur que les côtés (9-9A) et alignés avec ledites jupes (7-7A), à chaque extrémité, des pattes (8-8A-8B-8C) avec des griffes d'ancrage (8D-8E-8F-8G) pour enfiler sur des moyens respectifs du bâti-support (4).

3. ENSEMBLE MODULAIRE POUR MÉCANISMES ÉLECTRIQUES DE SURFACE ET/OU À ENCASTRER, selon la revendication 2, une plaque-capot (1) qui a des côtés (9-9A) pourvus de moyens femelles pour le montage des flancs enjoliveurs (2-3) qui est caractérisé en ce que ce sont des ouvertures rectangulaires (10-10A-10B-10C) proches à chaque extrémité de la plaque (1) et associée aux étendues échelonnées respectives (11-11A-1B-11C), qui augmentent sa lumière pour pouvoir encastrer les flancs et les consolider dans les ouvertures (10-10A-108-10C).

4. ENSEMBLE MODULAIRE POUR MÉCANISMES ÉLECTRIQUES DE SURFACE ET/OU À ENCASTRER,, selon les revendication 1 et 3 pour l'accès du branchement extérieur des fils d'alimentation affaiblis et praticables -pour casser(13), 13A, 13B, 13C), en regard des accès respectifs du bâti (4).

5. ENSEMBLE MODULAIRE POUR MÉCANISMES ÉLECTRIQUES DE SURFACE ET/OU À ENCASTRER, selon la revendication 1, les flancs enjoliveurs (2) (3) formés par une pièce creuse avec un profil arc-sphérique identique à celui de la plaque (1) - en forme de quartier-qui est caractérisé en ce que elle est delimité par un plan extérieur (15) arc-convexe légèrement bombé et un plan intérieur (16) droit qui, aux extrémités respectives du bord intéireur, a des saillies de sertissage mâles (17-17A-17B-17C), en forme de queue d'aronde associés aux petits crans (18-18a-18B-18C) attenante à l'extrémité extérieure de ceux-ci.

6. ENSEMBLE MODULAIRE POUR MÉCANISMES ÉLECTRIQUES DE SURFACE ET/OU À ENCASTRER, selon la revendication 5, lesdits sertissages mâles (17, 17A, 17B, 17C) dans une variante de réalisation est caractérisé en ce qu'ils sont alternés avec des évidements intercalés respectif (19-19A-19B-19C) à encastrer sur les membres rainés et languettés de liaison (23) du bâti (4).

7. ENSEMBLE MODULAIRE POUR MÉCANISMES ÉLECTRIQUES DE SURFACE ET/OU À ENCASTRER, , selon les revendications 1 et 5 qui comprend un bâti-support (4) carré de mesures normalisées 71x71 m/m, à profil en "U" (20) de plans droits qui est défini par deux parois concentriques, une extérieure et une autre intérieure, qui se cractérise en ce que sur le socle externe de la paroi intérieure sont disposés des ancrages formés par des rainures (19-29A-29B-29C) avec des épaulements intermédiaires (29D-29E-29F-29G) et, sur le socle intérieur, sont centralement aménagés des défoncements (30) avec des tétons en porte-à-faux (31) bordés partiellement par une oreille (31A) pour le serrage de la ferrure d'enclenchement du bâti (4) dans la boite encastrée de connexion.

8. ENSEMBLE MODULAIRE POUR MÉCANISMES ÉLECTRIQUES DE SURFACE ET/OU À ENCASTRER, selon les revendications 1, 5 et 7 qui comprend des moyens rainés et languettés de liaison (23), pour unir les bâtis (4, 4A, 4B...) entre eux, qui sont situés au ras de la base du bâti (1) sont caractérisés en ce que la paroi extérieure, aux extrémités respectives, comprend des rainures (24-24A-245B-24C), à profil évasé, co-attenantes avec des trous oblongues (25-25a-25B-25C) disposés aux coins de la base, en position oblique, pour l'interconnexion intérieure des fils conducteurs.

9. ENSEMBLE MODULAIRE POUR MÉCANISMES ÉLECTRIQUES DE SURFACE ET/OU À ENCASTRER, selon la revendication 1, 5, 7 et 8 le bâti (4) par ses extrémités est caractérisé en ce qu'ìl comprend des rainures (26-26A-26B-26C) en regard des secteurs praticables (13-13A-13B-13C) de la plaque (1) pour l'accès du branchement extérieur des fils d'alimentation.

10. ENSEMBLE MODULAIRE POUR MÉCANISMES ÉLECTRIQUES DE SURFACE ET/OU À ENCASTRER, selon la revendication 1, qui comprend une ferrure d'enclenchement pour l'encastrement du bâti (2) dans la boite encastrée de connexion qui est une pièce indèpendante, qui est caractérisée en ce que c'est un pont (32) en forme de fourche, de patte plates (33-34), qui comprend des trous (35) aux extrémités respectives pour se fixer aux tétons (31) du bâti (4) en cmpreant, aux extrémités de la barre intermédiaire, des jeux respectifs de griffes d'enclenchement (36-37) assistés d'organes tenseurs (38-39).

11. ENSEMBLE MODULAIRE POUR MÉCANISMES ÉLECTRIQUES DE SURFACE ET/OU À ENCASTRER, selon les revendications 1 à 4, les touches pour mécanismes interrupteurs ou les bases pour des mécanismes de fiche sont caractérisées en ce que leur développmeent a un profil arc-sphérique complémentaire de celui de la plaque (1) en configurant une surface arc-sphérique uniforme avec celle-ci.
